# EUROPEAN PATENT SPECIFICATION

(11) **EP 3 019 035 B1**
(45) Date of publication and mention of the grant of the patent: **13.06.2018**
(21) Application number: 14823233.3
(22) Date of filing: 08.07.2014
(51) Int. Cl.: A23L 27/40, A23L 33/17, A23P 20/10

(54) **SALT PRODUCTS COATED WITH NATURAL AMINO ACIDS EXTRACTS FOR SODIUM INTAKE REDUCTION**
MIT NATÜRLICHEN AMINOSÄUREN BESCHICHTETE SALZPRODUKTE ZUR VERRINGERUNG DER NATRIUMAUFNAHME
PRODUITS DE SEL ENROBÉ D'EXTRAITS D'ACIDES AMINÉS NATURELS POUR RÉDUIRE L'APPORT EN SEL

(30) Priority: 08.07.2013 KR 20130079916
(43) Date of publication of application: 18.05.2016
(73) Proprietor: Maeil Foods Co., Ltd., Suncheon-si, Jeollanam-do 540-813 (KR)
(72) Inventor: OH, Moo, Suncheon-si Jeollanam-do 540-030 (KR); OH, Sang Ho, Suncheon-si Jeollanam-do 540-703 (KR); GOO, Hoo Mo, Suncheon-si Jeollanam-do 540-756 (KR); PARK, Kwang Kun, Suncheon-si Jeollanam-do 540-941 (KR)
(74) Representative: Abel & Imray
(86) International application number: PCT/KR2014/006110
(87) International publication number: WO 2015/005645

(56) References cited:
- JP-A- 2010 011 807
- JP-A- 2011 062 171
- KR-A- 20060 094 120
- KR-B1- 100 859 098
- US-A- 2 596 333
- US-A- 5 098 723
- US-A1- 2010 075 017

## Description

### [Technical Field]

The present invention relates to salt products coated with the natural amino acid extracts for sodium intake reduction.

### [Background Art]

Sodium is one of the components of salt that we take daily. That is, sodium that we take every day is mostly from salt we take every day. Salt is one of the important minerals that are essential for the growth of human and animals, but overtaking thereof is a reason of many diseases. Particularly, salt is appointed as a major reason of hypertension, and thus the campaign for salt (sodium) intake reduction has been actively going on in most of advanced countries including USA and other Western countries.

In Korea, most people take sodium everyday 2 ∼ 3 times higher the amount of daily recommended salt intake, which is 2000 mg, proposed by World Health Organization (WHO). Recently, Ministry of Food and Drug Safety (MFDS) Korea leads the campaign for lowering salt (sodium) intake. As a part of the effort, edible salt mixed with potassium chloride to substitute sodium of salt has been tried on the market. However, potassium included in potassium chloride tastes not only salty but also bitter, and as a result when potassium chloride is used to prepare food, people taste the food less salty, which makes people add more salt to food than before, resulting in that sodium intake is not reduced at all. Make matter worse, when a patient having kidney disease takes food containing potassium, lethal side effects can be induced. Therefore, salt mixed with potassium chloride is not promising in further use.

It is not easy to reduce salt intake even though everybody is well aware of the important of reducing salt intake. That is because salt has a unique function of increasing food taste, so called taste booster. Taste booster indicates the function of making other tastes strong so as to keep overall balance among tastes. So, to be successful in reducing salt intake, it is necessary to be successful in substituting the taste boosting function with other ingredients so as not to reduce the total quality of food as a matter of taste but to make the food taste rich.

Each amino acid has been known to have a unique taste characteristics such as savory taste, sour taste, sweet taste, and bitter taste, which varies from about 20 different amino acids. Amino acid is composed of amino group and carboxyl group, suggesting that it has isoelectric point (IEP) that is the pH value when the electric charge of an ampholyte such as an amino acid and a protein or the electric charge of a colloidal particle becomes zero. Those amino acids having multiple carboxyl groups such as asparaginic acid and glutamic acid have lower IEP, while those basic amino acids having multiple amino acid groups such as arginine, histidine, and lysine have higher IEP. In addition to the unique taste characteristics, amino acids have their unique IEPs. Each amino acid shows the lowest water solubility at its IEP, suggesting that each amino acid can be separated and concentrated by using IEP.

Korean patent No. 915304, No. 859098, and No. 859099, all presented by Maeil Foods, describe the preparation of amino acid extracts. However, the possibility of reducing sodium consumption by amino acid extracts has not been explained in any of the prior arts. Korean Patent Publication No. 2013-0023654 describes the salt coated with cereal or vegetable powder, and Korean Patent No. 1170495 describes the salt coated with Salicomia herbaceal extract. However, no descriptions on the salt coated with amino acid extracts have been disclosed, yet, which makes the present invention different from other previous inventions in technical composition.

The present inventors have the techniques to hydrolyze a protein by using an inorganic acid such as HCl and to neutralize the hydrolysate by using sodium carbonate or sodium hydroxide to extract amino acids from the protein, and further the techniques to concentrate the extracted amino acids by vacuum evaporation and to crystallize the amino acids by regulating pH with each unique IEP to separate and concentrate amino acids according to their taste characteristics (Korean Patent No. 915304, No. 859098, and No. 859099). US 2,596,333 provides a dietary substitute for sodium chloride, which consists of individual particles having the taste, appearance and stability of table salt. The potassium chloride salt is coated with a composition comprising glutamic acid, starch and gum arabic.

Based on the above, the present inventors further studied and completed this invention by confirming that when salt, either sun-dried salt or refined salt, was coated with amino acid extracts, taste boosting function of the salt became reinforced, so that food taste was still good even with less amount of salt.

### [Disclosure]

### [Technical Problem]

It is an object of the present invention to provide salt products coated with natural amino acid extracts effective in reducing sodium intake.

### [Technical Solution]

To achieve the above object, the present invention provides salt products preparable by coating raw salt with the amino acid extract which is obtained by the following processes: obtaining hydrolysate by treating one or more proteins selected from the group consisting of wheat gluten, corn gluten, defatted soybean, rice protein, and gelatin with acid and alkali, followed by filtering the hydrolysate to collect liquid phase therefrom; concentrating the liquid phase under reduced pressure to make the concentration 1.5 ∼ 2.5 fold thicker and regulating pH of the concentrate to 3.1 ∼ 3.3, leading to the eduction of glutamate; filtering and separating the glutamate educed concentrate to separate solid phase from liquid phase; and obtaining amino acid extract containing glutamate by drying and pulverizing the solid phase, or obtaining the amino acid extract by drying and pulverizing the liquid phase, or obtaining the amino acid extract mixture by mixing the above two amino acid extracts, wherein the salt product contains the amino acid extract at the concentration of 3.0 ∼ 10.0 weight% and the raw salt at the concentration of 90.0 ∼ 97.0 weight%.

In addition, the present invention provides a method for preparing salt products which comprises the following steps:
(step 1) obtaining hydrolysate by treating one or more proteins selected from the group consisting of wheat gluten, corn gluten, defatted soybean, rice protein, and gelatin with acid and alkali, followed by filtering the hydrolysate to collect liquid phase therefrom;
(step 2) concentrating the liquid phase obtained in step 1) under reduced pressure to make the concentration 1.5 ∼ 2.5 fold thicker and regulating pH of the concentrate to 3.1 ∼ 3.3, leading to the eduction of glutamate;
(step 3) filtering and separating the glutamate educed concentrate of step 2) to separate solid phase from liquid phase;
(step 4) obtaining amino acid extract containing glutamate by drying and pulverizing the solid phase of step 3), and obtaining amino acid extract by drying and pulverizing the liquid phase of step 3); and,
(step 5) coating raw salt with the amino acid extract containing glutamate, the amino acid extract obtained from the liquid phase, or the amino acid extract mixture thereof.

### [Advantageous Effect]

The present invention relates to salt products coated with natural amino acid extracts effective in reducing sodium intake. Precisely, the salt products of the invention are able to maintain taste of food with 30 ∼ 50% reduced salt, suggesting that they can effectively reduce daily intake of salt consumed with food.

### [Description of Drawings]

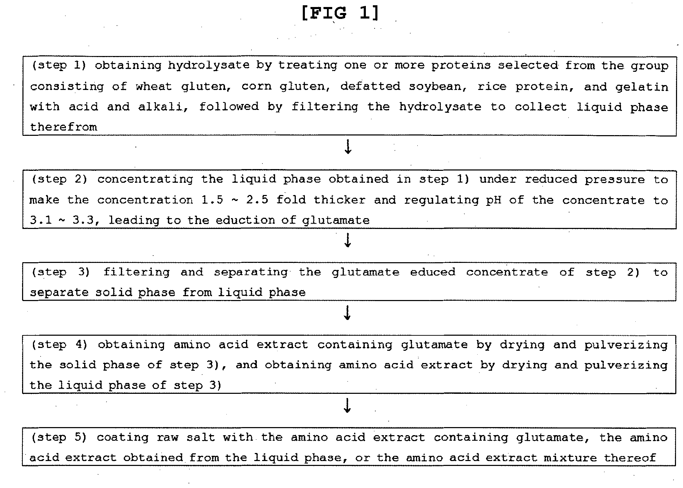

Figure 1 is a flow chart illustrating the preparation procedure of the salt product of the present invention.

### [Best Mode]

Hereinafter, the present invention is described in detail.

The present invention provides salt products coated with natural amino acid extracts effective in reducing sodium intake. More precisely, the present invention provides salt products preparable by coating raw salt with the amino acid extracts obtained by treating one or more proteins selected from the group consisting of wheat gluten, corn gluten, defatted soybean, rice protein, and gelatin with acid and alkali, wherein the salt product contains the amino acid extract at the concentration of 3.0 ∼ 10.0 weight% and the raw salt at the concentration of 90.0 ∼ 97.0 weight%.

The said amino acid extract can be either the amino acid extract obtained by the following processes; obtaining hydrolysate by treating one or more proteins selected from the group consisting of wheat gluten, corn gluten, defatted soybean, rice protein, and gelatin with acid and alkali, followed by filtering the hydrolysate to collect liquid phase therefrom; concentrating the liquid phase under reduced pressure to make the concentration 1.5 ∼ 2.5 fold thicker and regulating pH of the concentrate to 3.1 ∼ 3.3, leading to the eduction of glutamate; filtering and separating the glutamate educed concentrate to separate solid phase from liquid phase; and obtaining the amino acid extract containing glutamate by drying and pulverizing the solid phase, or obtaining the amino acid extract by drying and pulverizing the liquid phase, or obtaining the amino acid extract mixture by mixing the above two amino acid extracts.

The said hydrolysate can be obtained by the following processes; treating one or more proteins selected from the group consisting of wheat gluten , corn gluten , defatted soybean , rice protein, and gelatin with HCl at the molar ratio of 1.0 ∼ 1.5 and at the liquid ratio of 1.0 ∼ 2.0; regulating pH of the mixture to be 4.5 ∼ 5.2 with sodium carbonate or sodium hydroxide to neutralize HCl; treating the mixture with sodium hydroxide to make pH of the mixture to be 9.8 ∼ 10.5; and treating the alkali-treated mixture with HCl to re-neutralize it at pH 4.2 ∼ 5.2 again.

The salt product herein contains the amino acid extract at the concentration of 3.0 ∼ 10.0 weight% and the raw salt at the concentration of 90.0 ∼ 97.0 weight%. The salt product can be characteristically the one that is coated with the mixture of amino acid extract and cellulose powder. The preferable amount of the cellulose powder is 0.5 ∼ 2.0 weight% by the total weight (100 weight%) of the salt product.

The raw salt herein can be sun-dried salt, refined salt, or white salt.

The liquid phase obtained by filtering the hydrolysate resulted from treating the protein with acid and alkali can be concentrated by vacuum evaporation, preferably until the total concentration becomes 1.5 ∼ 4 fold thicker, more preferably 1.5 ∼ 3 fold thicker, and most preferably 1.5 ∼ 2.5 fold thicker.

The process of filtering and separating the glutamate educed concentrate indicates the process of separating solid phase from liquid phase by filtering or solid/liquid separation using a filter press or a centrifuge.

The solid phase and the liquid phase obtained by filtering and separating the glutamate educed concentrate can be dried and pulverized through low pressure drying, spray drying, vacuum drying, or freeze drying.

The amino acid extract containing glutamate has a strong savory taste (umami) owing to the high concentration of glutamic acid. The amino acid extract obtained from the liquid phase (the amino acid extract containing a low concentration of glutamate) contains a low concentration of glutamic acid, which means the concentration ratios of other amino acids are comparatively higher than that of glutamic acid, resulting in the taste of kokumi.

The cellulose powder is the major component of plant cell wall and fiber, which is a polysaccharide cellulose taking a large part of the xylem. The synthesized cellulose powder can be used but natural cellulose powder is more preferred. Cellulose has a great water holding capacity owing to its high molecular structure, so that it is generally used as an anticaking agent.

The salt product contains the amino acid extract at the concentration of 3.0 ∼ 10.0 weight% and the raw salt at the concentration of 90.0 ∼ 97.0 weight%. If the concentration of the amino acid extract is lower than 3.0 weight%, sodium intake reducing effect is low. The concentration of the amino acid extract might be more than 10.0 weight%, but 10.0 weight% would be enough to increase food taste and to bring sodium intake reducing effect. The concentration of the raw salt might be lower than 90.0 weight%, but when the concentration is at least 90.0 weight%, it gives a satisfactory salty taste. However, when the concentration of the raw salt is more than 97.0 weight%, it is difficult to coat the raw salt with the amino acid extract evenly, suggesting that sodium intake reducing effect will be in doubt.

The amino acid extract can be mixed with the cellulose powder at the concentration of 0.5 ∼ 2.0 weight% by the total weight of the salt product (100 weight%). At this time, when the concentration of the cellulose powder is less than 0.5 weight%, it is difficult to inhibit consolidation resulted from deliquescence of salt. The concentration of the cellulose powder is allowed to exceed 2 weight%, but the concentration up to 2 weight% will be enough to prevent salt from being dissolved. So there is no point of adding the cellulose powder more than needed.

The raw salt used for the salt product can include any general salt, which is though preferably selected from the group consisting of sun-dried salt, refined salt, and white salt.

The said sun-dried salt is the salt obtained from sea, precisely by the processes of dragging sea water into salt farm and evaporating moisture therefrom by wind and sun light. Salinity of the sun-dried salt is approximately 85 ∼ 88% (w/w).

The sun-dried salt can be purchased from a market but it is preferably used after the following processes; eliminating bittern from the sun-dried salt by centrifugation; heat-treating the sun-dried salt at the temperature of 200 ∼ 800°C, more preferably 500 ∼ 800°C, and most preferably 700 ∼ 800°C for 5 ∼ 10 minutes; and pulverizing the sun-dried salt in a proper size. Baking the sun-dried salt at such high temperature is performed in order to dry the salt or to make a change in crystal structure, to prevent consolidation of magnesium chloride causing deliquescence, or to increase taste. The baking process is effective in eliminating bittern from the sun-dried salt more, which brings the effect of reducing bitter taste of the sun-dried salt generally brought by bittern. As the temperature for baking is higher reaching at 700 ∼800°C, the efficiency of eliminating bittern increases. However, when the heat treatment temperature goes higher than 800°C, dissolution of the salt is induced, which is not preferred at all.

The said refined salt is the salt having the high purity (salinity) of 99% (w/w) obtained from sea water after eliminating impurities and heavy metals therein by using an ion-exchange membrane.

The said white salt is the re-crystallized salt obtained by the following processes; dissolving sun-dried salt in water; eliminating insoluble materials (impurities) therefrom; and crystallizing the purified clean salt water by heating. Such white salt is generally called "flower salt". Salinity of the white salt is approximately 88% (w/w).

The raw salt herein is preferably processed as pulverized particles in the size of 30 ∼ 80 mesh. The size of general sun-dried salt or the bigger size than 30 mesh can also be accepted but not preferred. When the processed salt in the size of 30 ∼ 80 mesh is used, the amino acid extract powder can cover the surface of the raw salt particles more efficiently, which brings the effect of increasing taste and at the same the effect of reducing sodium intake. If the processed salt particles are in a smaller size than 80 mesh, it is difficult to prepare the salt product successfully coated with the amino acid extract.

The protein used for the preparation of the said salt product is selected from the group consisting of wheat gluten , corn gluten , defatted soybean , rice protein, and gelatin, but not always limited thereto, and any compound that is useable as a protein source can be used.

The said hydrolysate can also be obtained by the following processes; treating one or more proteins selected from the group consisting of wheat gluten, corn gluten, defatted soybean, rice protein, and gelatin with HCl at the molar ratio (the ratio of molarity of nitrogen included in the raw material protein to molarity of HCl) of 1.0 ∼ 1.5 and at the liquid ratio (the ratio of the weight of the raw material to the volume of the diluted HCl solution) of 1.0 ∼ 2.0 to hydrolyze the proteins; regulating pH of the mixture to be 4.5 ∼ 7.0, preferably 4.5 ∼ 6.0, and more preferably 4.5 ∼ 5.2 with sodium carbonate or sodium hydroxide to neutralize HCl; treating the mixture with sodium hydroxide to make pH of the mixture to be 9.8 ∼ 14.0, preferably 9.8 ∼ 12.0, and more preferably 9.8 ∼ 10.5; and treating the alkali-treated mixture with HCl to re-neutralize it at pH 3.8 ∼ 7.0, preferably 4.0 ∼ 6.0, and more preferably 4.5 ∼ 5.2 again. By the treatment of alkali, the organic chloride compound generated during the treatment of HCl can be removed. When alkalization was induced with pH under 9.8, the organic chloride compound could not be completely eliminated. When the hydrolysate was neutralized or alkalized, pH after neutralization or alkalization was proposed to be regulated to be around 5.0 rather than around 7.0, which made the taste of the final amino acid extract better.

To prepare the hydrolysate treated with acid and alkali, 100 ∼ 200 weight part of 1 ∼ 2 fold diluted (v/v) 30 ∼ 35% HCl solution (w/v) was treated to 100 weight part of the protein. After treated with HCl, the protein was reacted preferably at 60 ∼ 120°C, more preferably at 80 - 120°C, and most preferably at 100 ∼ 120°C preferably for 12 ∼ 96 hours, more preferably for 48 ∼ 96 hours, and most preferably for 60 ∼ 96 hours. The protein was then treated with sodium hydroxide, followed by reaction preferably at 50 ∼ 100°C, and more preferably at 60 ∼ 80°C preferably for 1 ∼ 10 hours, and more preferably for 3 ∼ 7 hours.

To prepare the hydrolysate treated with acid and alkali, the target protein was treated with HCl, and then treated with sodium carbonate or sodium hydroxide for neutralization of HCl. At this time, sodium carbonate or sodium hydroxide could be a solution but preferably in the form of power or solid. 10 - 100 weight part of sodium carbonate or sodium hydroxide was treated to 100 weight part of the protein. When the protein was treated with sodium hydroxide again after being neutralized with sodium carbonate or sodium hydroxide, the sodium hydroxide used after the neutralization could be in the form of powder or solid, but more preferably 30 - 70% (w/v) solution, which was treated at the concentration of 10 - 100 weight part to 100 weight part of the protein. After the protein was treated with HCl, the protein was treated with sodium carbonate or sodium hydroxide to neutralize HCl, followed by alkalization again with sodium hydroxide. That is, after being treated with HCl, the protein was not treated right away with alkali at pH 9.8 or higher, and instead the protein was through neutralization reaction at around pH 5, which brought the richness in taste of the final amino acid extract.

In the course of the preparation of the hydrolysate, the protein was hydrolyzed with HCl and the HCl was then neutralized with sodium carbonate or sodium hydroxide, followed by alkalization of the protein by treating it with sodium hydroxide. In the above process, it could be accepted to regulate pH to be at least 9.8 or up by treating sodium carbonate or sodium hydroxide just once, but it was preferred to induce neutralization in between which favored for stable acid or alkali reaction.

When the protein was re-neutralized, 30 ∼ 35% HCl solution was preferably used, whose concentration in 100 weight part of the protein was 10 ∼ 50 weight part.

The salt product of the present invention can be used in every where there general sun-dried salt, refined salt, white salt, or processed salt can be used.

The salt product of the present invention is preferably formulated in the form of the amino acid extract coated salt, more precisely in the form of salt coated with the amino acid extract containing glutamate with strong savory taste, in the form of salt coated with the amino acid extract obtained from the liquid phase having strong kokumi, or in the form of salt coated with the mixture thereof. The salt product can also be prepared with the amino acid extract prepared by drying and pulverizing the vacuum concentrate without eduction of glutamate. However, when the salt product was prepared with the amino acid extract containing glutamate, the amino acid extract obtained from the liquid phase, or the mixture thereof, such taste as savory taste or kokumi can be more properly regulated.

In addition, the salt product of the present invention can also be prepared as the mixed salt prepared by mixing raw salt with the amino acid extracts explained above (the amino acid extract containing glutamate with strong savory taste, the amino acid extract obtained from the liquid phase having strong kokumi, the mixture of the two, and the amino acid extract prepared by drying and pulverizing the vacuum concentrate without eduction of glutamate), and also as the mixed crystal salt having the structure of amino acid extract imported salt crystal, for which raw salt and the said amino acid extract were dissolved in water and re-crystallized.

Coating raw salt with the amino acid extract for the preparation of salt product was performed by the conventional method largely used for coating food or medicine. Preferably, raw salt was heated and stirred, during which the amino acid extract dissolved in water was sprayed to coat raw salt with the amino acid extract. At this time, water was added to the amino acid extract at the volume of 4 ∼ 8 times the weight of the amino acid extract to dissolve the amino acid extract. Even though the amino acid extract was dissolved to spread, the amino acid extract was evaporated as soon as it touched salt because it was in the middle of heating and stirring raw salt, resulting in the coating of the salt surface. The moisture level of salt itself was not changed owing to the moisture included in the amino acid extract before being coated with the amino acid extract.

In the course of the preparation of the amino acid extract for the production of the salt product of the present invention, the hydrolysate prepared by treating one or more proteins selected from the group consisting of wheat gluten, corn gluten, defatted soybean, rice protein, and gelatin with enzymes such as flavourzyme, viscozyme, and glutaminas, can be used instead of the hydrolysate prepared by treating acid and alkali.

In a preferred embodiment of the present invention, to prepare the salt product coated with the natural amino acid extract efficient in reducing sodium intake (see Figure 1), the present inventors first prepared the amino acid extract containing glutamate with strong savory taste from the protein selected from the group consisting of wheat gluten (SingSong Industrial Co., Ltd., Nonsan, Korea), corn gluten (Ingredients Korea., Icheon, Korea), defatted soybean (SajoHaepyo, Korea), rice protein (CJ CheilJedang, Korea), and gelatin (online store) and another amino acid extract obtained from the liquid phase containing a low concentration of glutamate but having strong kokumi. Then, sun-dried salt or refined salt was coated with those amino acid extracts prepared in this invention as shown in Table 1.

**[Table 1]**

| Condition | Mixing condition of amino acid extract, the coating component (w:w) | | Raw salt |
|---|---|---|---|
| Example 6-1 | Example 1-1 extract 50% | Example 1-2 extract 50% | Bittern removed/heat treated sun-dried salt |
| Example 6-2 | Example 1-1 extract 100% | - | Bittern removed/heat treated sun-dried salt |
| Example 6-3 | - | Example 1-2 extract 100% | Bittern removed/heat treated sun-dried salt |
| Example 6-4 | Example 1-1 extract 50% | Example 1-2 extract 50% | refined salt |
| Example 6-5 | Example 2-1 extract 50% | Example 2-2 extract 50% | Bittern removed/heat treated sun-dried salt |
| Example 6-6 | Example 3-1 extract 50% | Example 3-2 extract 50% | Bittern removed/heat treated sun-dried salt |
| Example 6-7 | Example 4-1 extract 50% | Example 4-2 extract 50% | Bittern removed/heat treated sun-dried salt |
| Example 6-8 | Example 5-1 extract 50% | Example 5-2 extract 50% | Bittern removed/heat treated sun-dried salt |

To investigate the effect of the salt product prepared by the method of the present invention on sodium intake reduction, well-trained 20 panels were hired who tasted bean-sprout soup treated with different salts (general, sun-dried salt, general refined salt, bittern removed/heat treated sun-dried salt) and the salt of the present invention as shown in Table 1. As a result, it was confirmed that the salt product of the present invention was efficient in reducing salt intake about 30 ∼ 50%, compared with other salts (general sun-dried salt, general refined salt, bittern removed/heat treated sun-dried salt), with keeping taste of food (see Table 4) unchanged. To investigate the conservative property of the salt product of the present invention, the mixed salt comprising the amino acid extract containing glutamate of wheat gluten having strong savory taste or the amino acid extract obtained from the liquid phase containing a low concentration of glutamate of wheat gluten having strong kokumi and raw salt, and the mixed salt comprising the amino acid extract and salt crystal were prepared. The prepared salts and the salt products of the present invention shown in Table 1 were compared among each other after 2 week conservation period in the condition similar to the humid summer rainy season with the container open. As a result, the salt products of the present invention remained as each independent particle without being lumped or hardened, while the mixed salt prepared by mixing the amino acid extract and raw salt and the other mixed salt prepared by mixing the amino acid extract with salt crystal were confirmed to be a lump. When the salt product of the present invention was used in a restaurant for 1 month, the salt of the invention remained as it was, while the mixed salt demonstrated the separation of the amino acid powder from the salt particles from the bottom of the container.

Therefore, it was confirmed that coating the raw salt material with the amino acid extract favored salt preservation and reducing sodium intake. So, the salt product coated with the natural amino acid extract for sodium intake reduction of the present invention can reduce salt consumed together with daily food efficiently.

In addition, the present invention provides a method for preparing salt products which comprises the following steps:
(step 1) obtaining hydrolysate by treating one or more proteins selected from the group consisting of wheat gluten, corn gluten, defatted soybean, rice protein, and gelatin with acid and alkali, followed by filtering the hydrolysate to collect liquid phase therefrom;
(step 2) concentrating the liquid phase obtained in step 1) under reduced pressure to make the concentration 1.5 ∼ 2.5 fold thicker and regulating pH of the concentrate to 3.1 ∼ 3.3, leading to the eduction of glutamate;
(step 3) filtering and separating the glutamate educed concentrate of step 2) to separate solid phase from liquid phase;
(step 4) obtaining amino acid extract containing glutamate by drying and pulverizing the solid phase of step 3), and obtaining amino acid extract by drying and pulverizing the liquid phase of step 3); and,
(step 5) coating raw salt with the amino acid extract containing glutamate, the amino acid extract obtained from the liquid phase, or the amino acid extract mixture thereof.

By confirming the way of coating the raw salt material with the amino acid extract is efficient in preserving and maintaining the condition of salt and at the same time in reducing sodium intake, the salt product coated with the natural amino acid extract for sodium intake reduction of the present invention can be used in daily cooking to reduce salt intake efficiently.

### [Mode for Invention]

Practical and presently preferred embodiments of the present invention are illustrative as shown in the following Examples.

### Example 1: Preparation of amino acid extract from wheat gluten

### <1-1> Amino acid extract containing glutamate of wheat gluten with strong savory taste

Wheat gluten was purchased from SingSong Industrial Co., Ltd., Nonsan, Korea. To prepare wheat gluten, wheat flour was suspended in water. While stirring, starch was dissolved in water to prepare starch suspension and gluten remained, resulting in the separation of starch and gluten from the wheat flour. After separating the starch suspension, wheat gluten was obtained by drying the remained gluten.

Diluted HCl solution was prepared by mixing 6.8 ℓ of 35% (w/v) HCl solution and 2.8 ℓ of water. The diluted HCl solution was mixed with 8 kg of wheat gluten to make the molar ratio of HCl in wheat gluten 1.07 and the liquid ratio 1.2. Then, mixture of diluted HCl solution and wheat gluten was heated at 106°C for 72 hours, leading to acid hydrolysis. 4.4 kg of sodium carbonate was added thereto to make pH 5.0, leading to neutralization.

Then, 2 ℓ of 50% (w/v) sodium hydroxide solution was added thereto, followed by alkalization at 75°C for 5 hours with pH 10.3, by which the organic chloride compounds generated during the acid hydrolysis were eliminated.

2 ℓ of 35% (w/v) HCl solution was added thereto again to make the solution re-neutralized with pH 5.0, by which the final protein hydrolysate was obtained. The hydrolysate was filtered to separate solid materials including humus generated during the hydrolysis and liquid phase. The obtained liquid phase was concentrated under reduced pressure to make the concentration 2 times thicker (1/2 volume). After the concentration under reduced pressure, glutamate (isoelectric point: pH 3.1 ∼ 3.3) was educed by regulating pH of the concentrate as 3.2 The glutamate educed concentrate was filtered to separate solid phase and liquid phase. From the solid phase, the extract containing glutamate was obtained. The obtained extract has strong savory taste (umami) and thus named the amino acid extract containing glutamate of wheat gluten with strong umami (the amino acid extract of Example 1-1). The extract was prepared in the form of powder by the process of vacuum drying or spray drying.

### <1-2> Amino acid extract obtained from the liquid phase containing a low concentration of glutamate of wheat gluten with strong kokumi

The liquid phase was separately obtained in Example 1-1, in addition to the solid phase. This liquid phase showed comparatively a low concentration of glutamate, compared with amino acid compositions of other amino acid extracts, and rather higher concentrations of other amino acids such as proline instead, which gave strong kokumi. The liquid part was then prepared as powder by vacuum evaporation or spray drying, which was named the amino acid extract obtained from the liquid phase containing a low concentration of glutamate of wheat gluten with strong kokumi (the amino acid extract of Example 1-2).

### Example 2: Preparation of amino acid extract from corn gluten

### <2-1> Amino acid extract containing glutamate of corn gluten with strong savory taste

The amino acid extract was prepared by the same manner as described in Example 1-1 except that corn gluten was used as a protein. Corn gluten was purchased from Ingredion Korea Inc., Icheon, Korea. To prepare corn gluten, cornhusk and embryo were eliminated first and then endosperm powder was obtained by pulverizing endosperm only. The endosperm powder was suspended in water. While stirring, starch was dissolved in water to prepare starch suspension and gluten remained, resulting in the separation of starch and gluten from the endosperm powder. After separating the starch suspension, corn gluten was obtained by drying the remaining gluten.

Corn gluten was hydrolyzed to obtain a hydrolysate by the same manner as described in Example 1-1, followed by filtering and concentrating the hydrolysate to educe glutamate. The solid phase containing glutamate and the liquid phase were separated. As a result, the amino acid extract containing glutamate of corn gluten with strong savory taste was prepared (the amino acid extract of Example 2-1).

### <2-2> Amino acid extract obtained from the liquid phase containing a low concentration of glutamate of corn gluten with strong kokumi

The amino acid extract was prepared by the same manner as described in Example 1-2 except that corn gluten was used as a protein. The amino acid extract obtained from the liquid phase containing a low concentration of glutamate of corn gluten with strong kokumi (the amino acid extract of Example 2-2) was prepared by using the liquid phase separated in Example 2-1.

### Example 3: Preparation of amino acid extract from defatted soybean

### <3-1> Amino acid extract containing glutamate of defatted soybean with strong savory taste

The amino acid extract was prepared by the same manner as described in Example 1-1 except that defatted soybean was used as a protein. Defatted soybean was purchased from SajoHaepyo, Incheon, Korea. To obtain defatted soybean, soybean hull was taken off and the soybean was pressed down to elude soybean oil by using hexane.

Defatted soybean was hydrolyzed to obtain a hydrolysate by the same manner as described in Example 1-1, followed by filtering and concentrating the hydrolysate to educe glutamate. The solid phase containing glutamate and the liquid phase were separated. As a result, the amino acid extract containing glutamate of defatted gluten with strong savory taste was prepared (the amino acid extract of Example 3-1).

### <3-2> Amino acid extract obtained from the liquid phase containing a low concentration of glutamate of defatted soybean with strong kokumi

The amino acid extract was prepared by the same manner as described in Example 1-2 except that defatted soybean was used as a protein. The amino acid extract obtained from the liquid phase containing a low concentration of glutamate of defatted soybean with strong kokumi (the amino acid extract of Example 3-2) was prepared by using the liquid phase separated in Example 3-1.

### Example 4: Preparation of amino acid extract from rice protein

### <4-1> Amino acid extract containing glutamate of rice protein with strong savory taste

The amino acid extract was prepared by the same manner as described in Example 1-1 except that rice protein was used as a protein. Rice protein was purchased from CJ CheilJedanl, Korea. To obtain rice protein, rice bran, the milling by-product of rice, was defatted by using hexane. The defatted rice bran was suspended in water. The defatted rice bran suspension was treated with acid and alkali to precipitate protein. Rice protein was obtained by drying the precipitated protein.

Rice protein was hydrolyzed to obtain a hydrolysate by the same manner as described in Example 1-1, followed by filtering and concentrating the hydrolysate to educe glutamate. The solid phase containing glutamate and the liquid phase were separated. As a result, the amino acid extract containing glutamate of rice protein with strong savory taste was prepared (the amino acid extract of Example 4-1).

### <4-2> Amino acid extract obtained from the liquid phase containing a low concentration of glutamate of rice protein with strong kokumi

The amino acid extract was prepared by the same manner as described in Example 1-2 except that rice protein was used as a protein. The amino acid extract obtained from the liquid phase containing a low concentration of glutamate of rice protein with strong kokumi (the amino acid extract of Example 4-2) was prepared by using the liquid phase separated in Example 4-1.

### Example 5: Preparation of amino acid extract from gelatin <5-1> Amino acid extract containing glutamate of gelatin with strong savory taste

The amino acid extract was prepared by the same manner as described in Example 1-1 except that gelatin was used as a protein. Gelatin was purchased from online market, which was one of those being sold as a baking material. To prepare gelatin, impurities were eliminated from cow skin or pig skin, to which water was added. The mixture was heated to extract the solution containing gelatin. The solution was filtered and treated with acid and alkali to regulate pH. Gelatin was obtained by concentrating, sterilizing, cooling, drying, and purifying the solution. The primary raw material for gelatin is mostly cow skin.

Gelatin was hydrolyzed to obtain a hydrolysate by the same manner as described in Example 1-1, followed by filtering and concentrating the hydrolysate to educe glutamate. The solid phase containing glutamate and the liquid phase were separated. As a result, the amino acid extract containing glutamate of gelatin with strong savory taste was prepared (the amino acid extract of Example 5-1).

### <5-2> Amino acid extract obtained from the liquid phase containing a low concentration of glutamate of gelatin with strong kokumi

The amino acid extract was prepared by the same manner as described in Example 1-2 except that gelatin was used as a protein. The amino acid extract obtained from the liquid phase containing a low concentration of glutamate of gelatin with strong kokumi (the amino acid extract of Example 5-2) was prepared by using the liquid phase separated in Example 5-1.

### Example 6: Preparation of sun-dried salt or refined salt product containing amino acid extract

The amino acid extracts of Example 1 ∼ Example 5 were prepared based on Table 1 (the amino acid extract containing glutamate with strong savory taste, the amino acid extract obtained from the liquid phase having strong kokumi, or the mixture of the two).

Salt has deliquescent property, which means salt absorbs moisture in the air to be hardened. To prevent such hardening phenomenon of salt, the present inventors added natural cellulose powder (purchased from Central Fiber Chemical Inc., Korea) to the amino acid extract at the ratio of 2 weight% by the 100 weight% of the total salt for coating.

To coat raw salt with the mixture of the amino acid extract and the cellulose powder, the conventional coating machine was used. Raw salt was heated and stirred in the coating machine. The amino acid extract and cellulose powder mixture was mixed with water (at the volume of 5 times the weight of the amino acid extract powder). The prepared solution was sprayed on the surface of raw salt to coat the salt with the mixture. The amount of the amino acid extract to coat salt was 5 weight% by the 100 weight% of the total salt used for coating (that is, salt 93 g, amino acid extract 5 g, and cellulose powder 2 g were included in 100 g of the total coated salt).

Salinity of the amino acid extract was confirmed to be 20% (w/w), while salinity of the general sun-dried salt produced in salt farm was 85 ∼ 88% (w/w). Salinity of the sun-dried salt baked at a high temperature, after bittern was eliminated, was 94 ∼ 95%, while salinity of refined salt was 99%. To prepare the sun-dried salt for this invention, bittern was removed from the salt by centrifugation and then the salt was baked at 700 ∼ 800°C, followed by pulverization in regular sizes of 30 ∼ 80 mesh. In the meantime, refined salt was purchased from Hanju Salt Co., Korea.

**[Table 1]**

| Condition | Mixing condition of amino acid extract, the coating component (w:w) | | Raw salt |
|---|---|---|---|
| Example 6-1 | Example 1-1 extract 50% | Example 1-2 extract 50% | Bittern removed/heat treated sun-dried salt |
| Example 6-2 | Example 1-1 extract 100% | - | Bittern removed/heat treated sun-dried salt |
| Example 6-3 | - | Example 1-2 extract 100% | Bittern removed/heat treated sun-dried salt |
| Example 6-4 | Example 1-1 extract 50% | Example 1-2 extract 50% | refined salt |
| Example 6-5 | Example 2-1 extract 50% | Example 2-2 extract 50% | Bittern removed/heat treated sun-dried salt |
| Example 6-6 | Example 3-1 extract 50% | Example 3-2 extract 50% | Bittern removed/heat treated sun-dried salt |
| Example 6-7 | Example 4-1 extract 50% | Example 4-2 extract 50% | Bittern removed/heat treated sun-dried salt |
| Example 6-8 | Example 5-1 extract 50% | Example 5-2 extract 50% | Bittern removed/heat treated sun-dried salt |

### Comparative Example 1: Preparation of comparative salt <1-1> ∼ <1-4> Mixed salt

Mixed salt was prepared by mixing the amino acid extract mixture containing the amino acid extracts of Example 1-1 and Example 1-2 at the ratio shown in Table 2 (5 weight%, 5 g), natural cellulose powder (2 weight%, 2 g), and raw salt (93 weight%, 93 g). The raw salt herein could be sun-dried salt or refined salt. Bittern was eliminated from the sun-dried salt by centrifugation and then the salt was baked at 700 ∼ 800°C and pulverized in regular sizes of 30 ∼ 80 mesh.

**[Table 2]**

| Condition | Mixed condition of amino acid extract (w:w) | | Raw salt |
|---|---|---|---|
| Comparative Example 1-1 | Example 1-1 extract 50% | Example 1-2 extract 50% | Bittern removed/heat treated sun-dried salt |
| Comparative Example 1-2 | Example 1-1 extract 100% | - | Bittern removed/heat treated sun-dried salt |
| Comparative Example 1-3 | - | Example 1-2 extract 100% | Bittern removed/heat treated sun-dried salt |
| Comparative Example 1-4 | Example 1-1 extract 50% | Example 1-2 extract 50% | Refined salt |

### <1-5> ∼ <1-8> Mixed crystal salt

The amino acid extract mixture comprising the amino acid extracts of Example 1-1 and Example 1-2 (5 weight%, 5 g), natural cellulose powder (2 weight%, 2 g) and raw salt (93 weight%, 93 g) were dissolved in 1 ℓ of water, followed by evaporation to re-crystallize the salt. As a result, the mixed crystal salt containing the amino acid extract was prepared. The raw salt herein could be sun-dried salt or refined salt. Bittern was eliminated from the sun-dried salt by centrifugation and then the salt was baked at 700 ∼ 800°C and pulverized in regular sizes of 30 ∼ 80 mesh. The mixed salt was dissolved in water again and then re-crystallized, followed by pulverization in regular sizes of 30 ∼ 80 mesh.

**[Table 3]**

| Condition | Mixed condition of amino acid extract (w:w) | | Raw salt |
|---|---|---|---|
| Comparative Example 1-5 | Example 1-1 extract 50% | Example 1-2 extract 50% | Bittern removed/heat treated sun-dried salt |
| Comparative Example 1-6 | Example 1-1 extract 100% | - | Bittern removed/heat treated sun-dried salt |
| Comparative Example 1-7 | - | Example 1-2 extract 100% | Bittern removed/heat treated sun-dried salt |
| Comparative Example 1-8 | Example 1-1 extract 50% | Example 1-2 extract 50% | Bittern removed/heat treated sun-dried salt |

### Experimental Example 1: Sensory evaluation

To investigate the effect of the salt product prepared by the method of the present invention on sodium intake reduction, sensory evaluation was performed with 20 trained panels. Particularly, bean-sprout soup was prepared and treated with different salts (general sun-dried salt, general refined salt, bittern removed/heat treated sun-dried salt (bittern was eliminated by centrifugation and the salt was baked at 700 ∼ 800°C and pulverized in regular sizes of 30 ∼ 80 mesh)), and the salt products coated with the amino acid extracts of Example 6-1 ∼ Example 6-8 at the concentrations of 0.5 ∼ 1% (w/w). Panels who answered the soup was neither salty nor bland and agreed the taste was good overall were counted. The results are presented in Table 4. The results of sensory evaluation were verified by two-tailed test of pair test of soysauce test proposed by Japan Soysauce Research Institute.

**[Table 4]**

| Salt or salt product | Addition of salt or salt product in bean-sprout soup (%, w/w) | | | | | | | | |
|---|---|---|---|---|---|---|---|---|---|
| | 1 | 0.95 | 0.9 | 0.85 | 0.8 | 0.75 | 0.7 | 0.6 | 0.5 |
| Example 6-1 | 20 | 20 | 20 | 19 | 18 | 16 | 15 | 11 | 10 |
| Example 6-2 | 20 | 20 | 20 | 19 | 17 | 16 | 14 | 13 | 11 |
| Example 6-3 | 20 | 20 | 20 | 20 | 19 | 17 | 15 | 14 | 11 |
| Example 6-4 | 20 | 20 | 20 | 18 | 17 | 17 | 15 | 12 | 10 |
| Example 6-5 | 20 | 20 | 20 | 20 | 19 | 18 | 17 | 14 | 11 |
| Example 6-6 | 20 | 20 | 20 | 19 | 19 | 17 | 16 | 13 | 10 |
| Example 6-7 | 20 | 20 | 20 | 18 | 18 | 17 | 16 | 12 | 11 |
| Example 6-8 | 20 | 20 | 20 | 20 | 19 | 17 | 15 | 12 | 10 |
| General sun-dried salt | 20 | 19 | 16 | 12 | 5 | 0 | 0 | 0 | 0 |
| Bittern removed/heat treated sun-dried salt | 20 | 18 | 17 | 13 | 2 | 0 | 0 | 0 | 0 |
| General refined salt | 20 | 20 | 15 | 10 | 3 | 0 | 0 | 0 | 0 |

The general food salinity that does no harm on human is known to be 0.6 ∼ 0.7%. When general sun-dried salt, refined salt, or bittern removed/heat treated sun-dried salt was added to food, which would be less than 0.85% (w/w) salt concentration, people did not enjoy good taste of food and rather felt a little too bland, considering that Korean people enjoy a little salty food. However, when the salt product of the present invention was added to food, more than 70% of people answered the taste of food was good with the salinity of 0.7% (w/w) and 50% of people answered the taste of food was good even with lower salinity of 0.5% (w/w).

Referring the results shown in Table 4, the salt product prepared by the method of the present invention is more effective in reducing salt intake by 30 ∼ 50% with maintaining good taste of food than general sun-dried salt, refined salt, or bittern removed/heat treated sun-dried salt.

Therefore, when the salt product of the present invention is used, salt consumed along with food can be efficiently reduced but the taste and quality of food can be increased owing to the enhanced savory taste (umami) or kokumi of the salt product.

The evaluators hired above answered that tastes of all the soups, which were prepared respectively with the salt product coated with the amino acid extract containing glutamate with strong savory taste, with the salt product coated with the amino acid extract obtained from the liquid phase with strong kokumi, and with the salt product coated with the mixture of the amino acid extracts, were all different. That indicates that taste and flavor of food can be regulated by regulating the mixing ratio of the amino acid extract containing glutamate to the amino acid extract obtained from the liquid phase during the processing of salt.

It is also expected that the salt product of the present invention can also be effectively used for the preparation of patient food particularly for those who need sodium limited diet, owing to the sodium intake reducing effect of the salt product of the invention.

### Experimental Example 2: Property evaluation

To investigate conservative property of salt, the salt products prepared in Examples 6-1 ∼ 6-8, the mixed salts prepared in Comparative Examples 1-1 ∼ 1-4, the mixed crystal salts prepared in Comparative Examples 1-5 ∼ 1-8, general sun-dried salt, general refined salt, and bittern removed/heat treated sun-dried salt (bittern was eliminated by centrifugation and the salt was baked at 700 ∼ 800°C and pulverized in regular sizes of 30 ∼ 80 mesh) were respectively stored in containers under similar condition to that of summer rainy season (80% humidity and 30°C). The containers were not sealed and stored for 2 weeks. Then, the salts were compared after 2 weeks. As a result, the salt products prepared in Examples 6-1 ∼ 6-8 were still as they were in the particles without being lumped or hardened, but the salts of Comparative Examples 1-1 ∼ 1-8, general sun-dried salt, general refined salt, and bittern removed/heat treated sun-dried salt were all lumped into a big mass. The above result indicates that the coated salt products of the present invention prepared in Examples 6-1 ∼ 6-8 have lower deliquescent property than the general sun-dried salt, general refined salt, or the mixed salts and the mixed crystal salts of Comparative Examples 1-1 ∼ 1-8.

In the meantime, the salt products of Examples 6-1 ∼ 6-8 and the mixed salts of Comparative Examples 1-1 ∼ 1-8 were tried for 1 month in a restaurant. During this trial, the salts of Examples 6-1 ∼ 6-8 remained as they were, but the mixed salts of Comparative Examples 1-1 ∼ 1-4 showed that amino acid powders and salt particles were separated without being mixed together and the amino acid powders were accumulated down. That is, because of the difference in particle sizes, comparatively smaller amino acid powders were separated and sunken down. The salts having such property shook the balance of the sodium intake reducing effect. The more the mixed salts of Comparative Examples 1-1 ∼ 1-4 were used, the separation between the salt and amino acid powder, particularly in the bottom of the storage container, was bigger. The use of those salts did not bring satisfactory sodium intake reducing effect.

Therefore, coating raw salt with the amino acid extract according to the present invention was confirmed to be an effective method to preserve salt, to maintain salt condition, and to increase the effect of reducing sodium intake.

### [Industrial Applicability]

As explained hereinbefore, the present invention relates to salt products coated with the natural amino acid extracts effective in reducing sodium intake. Precisely, the salt products of the invention are able to maintain taste of food with 30 ∼ 50% reduced salt, suggesting that they can effectively reduce daily intake of salt consumed with food.

## Claims

1. A salt product preparable by coating raw salt with the amino acid extract which is obtained by the following processes: obtaining hydrolysate by treating one or more proteins selected from the group consisting of wheat gluten, corn gluten, defatted soybean, rice protein, and gelatin with acid and alkali, followed by filtering the hydrolysate to collect liquid phase therefrom; concentrating the liquid phase under reduced pressure to make the concentration 1.5 ∼ 2.5 fold thicker and regulating pH of the concentrate to 3.1 ∼ 3.3, leading to the eduction of glutamate; filtering and separating the glutamate educed concentrate to separate solid phase from liquid phase; and obtaining the amino acid extract containing glutamate by drying and pulverizing the solid phase, or obtaining the amino acid extract by drying and pulverizing the liquid phase, or obtaining the amino acid extract mixture by mixing the above two amino acid extracts, wherein the salt product contains the amino acid extract at the concentration of 3.0 ∼ 10.0 weight% and the raw salt at the concentration of 90.0 ∼ 97.0 weight%.

2. The salt product according to claim 1, wherein the hydrolysate is obtained by the following processes; treating one or more proteins selected from the group consisting of wheat gluten , corn gluten, defatted soybean , rice protein, and gelatin with HCl at the molar ratio of 1.0 ∼ 1.5 and at the liquid ratio of 1.0 ∼ 2.0; regulating pH of the mixture to be 4.5 ∼ 5.2 with sodium carbonate or sodium hydroxide to neutralize HCl; treating the mixture with sodium hydroxide to make pH of the mixture to be 9.8 ∼ 10.5; and treating the alkali-treated mixture with HCl to re-neutralize it at pH 4.2 ∼ 5.2 again.

3. The salt product according to claim 1 or claim 2, wherein the salt product is coated with the amino acid extract/cellulose powder mixture.

4. The salt product according to claim 3, wherein the cellulose powder is included at the concentration of 0.5 ∼ 2.0 weight% by the total 100 weight% of the salt product.

5. The salt product according to claim 1 or claim 2, wherein the raw salt is selected from the group consisting of sun-dried salt, refined salt, and white salt.

6. A method for preparing a salt product comprising the following steps;
(step 1) obtaining a hydrolysate by treating one or more proteins selected from the group consisting of wheat gluten, corn gluten, defatted soybean, rice protein, and gelatin with acid and alkali, followed by filtering the hydrolysate to collect the liquid phase therefrom;
(step 2) concentrating the liquid phase obtained in step 1) under reduced pressure to make the concentration 1.5 ∼ 2.5 fold thicker and regulating pH of the concentrate to 3.1 ∼ 3.3, leading to the eduction of glutamate;
(step 3) filtering and separating the glutamate educed concentrate of step 2) to separate the solid phase from the liquid phase;
(step 4) obtaining the amino acid extract containing glutamate by drying and pulverizing the solid phase of step 3), and obtaining the amino acid extract by drying and pulverizing the liquid phase of step 3); and,
(step 5) coating the raw salt with the amino acid extract containing glutamate, the amino acid extract obtained from the liquid phase of step 4), or the amino acid extract mixture thereof.

## Patentansprüche

1. Ein Salzprodukt, herstellbar durch Beschichten von Rohsalz mit dem Aminosäureextrakt, der durch die folgenden Verfahren erhalten wird: Gewinnen von Hydrolysat durch Behandeln eines oder mehrerer Proteine, ausgewählt aus der Gruppe bestehend aus Weizengluten, Maisgluten, entfetteter Sojabohne, Reisprotein und Gelatine, mit Säure und Alkali, gefolgt von Filtrieren des Hydrolysats, um daraus die flüssige Phase zu sammeln; Einengen der flüssigen Phase unter vermindertem Druck, um die Konzentration 1,5 ∼ 2,5-fach dicker zu machen, und Einstellen des pH-Werts des Konzentrats auf 3.1 ∼ 3,3, was zur Abführung von Glutamat führt; Filtrieren und Trennen des Konzentrats mit dem abgeführten Glutamat, um die feste Phase von der flüssigen Phase zu trennen; und Gewinnen des glutamathaltigen Aminosäureextrakts durch Trocknen und Pulverisieren der festen Phase oder Gewinnen des Aminosäureextrakts durch Trocknen und Pulverisieren der flüssigen Phase oder Gewinnen der Aminosäureextraktmischung durch Vermischen der obigen zwei Aminosäureextrakte, wobei das Salzprodukt den Aminosäureextrakt in der Konzentration von 3,0 ∼ 10,0 Gew.-% und das Rohsalz in der Konzentration von 90,0 ∼ 97,0 Gew.-% enthält.

2. Das Salzprodukt gemäß Anspruch 1, wobei das Hydrolysat durch die folgenden Verfahren erhalten wird: Behandeln von einem oder mehreren Proteinen, ausgewählt aus der Gruppe bestehend aus Weizengluten, Maisgluten, entfetteter Sojabohne, Reisprotein und Gelatine, mit HCl im Molverhältnis von 1,0 ∼ 1,5 und im Flüssigkeitsverhältnis von 1,0 ∼ 2,0; Einstellen des pH-Werts der Mischung auf 4,5 ∼ 5,2 mit Natriumcarbonat oder Natriumhydroxid, um HCl zu neutralisieren; Behandeln der Mischung mit Natriumhydroxid, um den pH-Wert der Mischung auf 9,8 ∼ 10,5 zu bringen; und Behandeln der alkalibehandelten Mischung mit HCl, um diese wieder auf pH 4,2 ∼ 5,2 zu neutralisieren.

3. Das Salzprodukt gemäß Anspruch 1 oder Anspruch 2, wobei das Salzprodukt mit der Aminosäureextrakt/Cellulosepulver-Mischung beschichtet ist.

4. Das Salzprodukt gemäß Anspruch 3, wobei das Cellulosepulver in der Konzentration von 0,5 ∼ 2,0 Gew.-%, bezogen auf insgesamt 100 Gew.-% Salzprodukt, enthalten ist.

5. Das Salzprodukt gemäß Anspruch 1 oder Anspruch 2, wobei das Rohsalz ausgewählt ist aus der Gruppe bestehend aus sonnengetrocknetem Salz, raffiniertem Salz und weißem Salz.

6. Ein Verfahren zur Herstellung eines Salzprodukts, umfassend die folgenden Schritte:
(Schritt 1) Gewinnen eines Hydrolysat durch Behandeln eines oder mehrerer Proteine, ausgewählt aus der Gruppe bestehend aus Weizengluten, Maisgluten, entfetteter Sojabohne, Reisprotein und Gelatine, mit Säure und Alkali, gefolgt von Filtrieren des Hydrolysats, um daraus die flüssige Phase zu sammeln;
(Schritt 2) Einengen der in Schritt 1 erhaltenen flüssigen Phase unter vermindertem Druck, um die Konzentration 1,5 ∼ 2,5-fach dicker zu machen, und Einstellen des pH-Werts des Konzentrats auf 3.1 ∼ 3,3, was zur Abführung von Glutamat führt;
(Schritt 3) Filtrieren und Trennen des Konzentrats mit dem abgeführten Glutamat von Schritt 2, um die feste Phase von der flüssigen Phase zu trennen;
(Schritt 4) Gewinnen des glutamathaltigen Aminosäureextrakts durch Trocknen und Pulverisieren der festen Phase von Schritt 3 und Gewinnen des Aminosäureextrakts durch Trocknen und Pulverisieren der flüssigen Phase von Schritt 3; und
(Schritt 5) Beschichten des Rohsalzes mit dem glutamathaltigen Aminosäureextrakt, dem aus der flüssigen Phase gewonnenen Aminosäureextrakt von Schritt 4 oder der Mischung aus diesen Aminosäuresäureextrakten.

## Revendications

1. Un produit consistant en un sel préparé par enrobage de sel brut par un extrait d'acide aminé obtenu par les procédés suivants:
- obtention d'un hydrolysat par traitement avec un acide et une base d'une ou plusieurs protéines choisies dans le groupe consistant en du gluten de blé, gluten de maïs, soja dégraissé protéine de riz et de la gélatine, puis filtration de l'hydrolysat pour en recueillir la phase liquide en résultant;
- concentration de la phase liquide sous pression réduite pour rendre la concentration 1,5 ∼ 2,5 fois plus épaisse et régulation du pH du concentré à une valeur de 3,1 ∼ 3,3, conduisant à l'éduction du glutamate;
- filtration et séparation du concentré de glutamate produit par éduction pour séparer la phase solide de la phase liquide;
- et obtention de l'extrait d'acide aminé contenant du glutamate par séchage et pulvérisation de la phase solide, ou en obtenant l'extrait d'acide aminé par séchage et pulvérisation de la phase liquide, ou en obtenant le mélange d'acides aminés par mélange des deux extraits d'acides aminés ci-dessus,
dans lequel le produit consistant en un sel contient l'extrait d'acide aminé à la concentration de 3,0 ∼ 10,0% en poids et le sel brut à la concentration de 90,0 ∼ 97,0% en poids.

2. Le produit consistant en un sel selon la revendication 1, dans lequel l'hydrolysat est obtenu par les procédés suivants:
- traitement d'une ou plusieurs protéines choisies dans le groupe consistant en du gluten de blé, gluten de maïs, soja dégraissé, protéine de riz et gélatine par HCl au rapport molaire de 1,0 ∼ 1,5 et au rapport de liquide de 1,0 ∼ 2,0;
- réglage du pH du mélange à 4,5 ∼ 5,2 avec du carbonate de sodium ou de l'hydroxyde de sodium pour neutraliser le HCl;
- traitement du mélange par de l'hydroxyde de sodium pour porter le pH du mélange à une valeur de 9,8 ∼ 10,5; et
- traitement du mélange traité par la base avec du HCl pour le neutraliser de nouveau à un pH 4,2 ∼ 5,2.

3. Le produit consistant en un sel selon la revendication 1 ou la revendication 2, dans lequel le produit consistant en un sel est revêtu de l'extrait d'acide aminé/mélange de poudre de cellulose.

4. Le produit consistant en un sel selon la revendication 3, dans lequel la poudre de cellulose est inclue à la concentration de 0,5 ∼ 2,0% en poids du total de 100% en poids du produit consistant en un sel.

5. Le produit consistant en un sel selon la revendication 1 ou la revendication 2, dans lequel le sel brut est choisi dans le groupe constitué par le sel séché au soleil, le sel raffiné et le sel blanc.

6. Un procédé de préparation d'un produit consistant en un sel comprenant les étapes suivantes:
- (étape 1) obtention d'un hydrolysat par traitement avec un acide et une base d'une ou plusieurs protéines choisies dans le groupe consistant en du gluten de blé, gluten de maïs, soja dégraissée, protéine de riz et de la gélatine, puis filtration de l'hydrolysat pour en recueillir la phase liquide en résultant;
- (étape 2) concentration de la phase liquide obtenue à l'étape 1) sous pression réduite pour rendre la concentration 1,5 ∼ 2,5 fois plus épaisse et régulation du pH du concentré à une valeur de 3,1 ∼ 3,3, conduisant à l'éduction du glutamate;
- (étape 3) filtration et séparation du concentré de glutamate produit par éduction de l'étape 2) pour séparer la phase solide de la phase liquide;
- (étape 4) obtention de l'extrait d'acide aminé contenant du glutamate par séchage et pulvérisation de la phase solide de l'étape 3), et obtention de l'extrait d'acide aminé par séchage et pulvérisation de la phase liquide de l'étape 3); et,
- (étape 5) revêtement du sel brut avec l'extrait d'acide aminé contenant du glutamate, l'extrait d'acide aminé obtenu à partir de la phase liquide de l'étape 4), ou le mélange d'extrait d'acides aminés en dérivant.
